(19) Europäisches Patentamt / European Patent Office / Office européen des brevets

(11) **EP 3 640 841 B1**

(12) **FASCICULE DE BREVET EUROPEEN**

(45) Date de publication et mention de la délivrance du brevet:
**09.08.2023 Bulletin 2023/32**

(21) Numéro de dépôt: **19203814.9**

(22) Date de dépôt: **17.10.2019**

(51) Classification Internationale des Brevets (IPC):
**G06V 10/75** *(2022.01)* **G06V 20/54** *(2022.01)*

(52) Classification Coopérative des Brevets (CPC):
**G06V 20/54; G01C 21/3807; G01C 21/3833; G01C 21/387; G06V 10/751**

(54) **DISPOSITIF ÉLECTRONIQUE ET PROCÉDÉ DE SURVEILLANCE D'UNE SCÈNE VIA UN ENSEMBLE DE CAPTEUR(S) ÉLECTRONIQUE(S), PROGRAMME D'ORDINATEUR ASSOCIÉ**

ELEKTRONISCHE VORRICHTUNG UND VERFAHREN ZUR ÜBERWACHUNG EINER SZENE MIT EINER GESAMTHEIT VON ELEKTRONISCHEN SENSOREN, UND ENTSPRECHENDES COMPUTERPROGRAMM

ELECTRONIC DEVICE AND METHOD FOR MONITORING A SCENE VIA A SET OF ELECTRONIC SENSOR(S), ASSOCIATED COMPUTER PROGRAM

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **17.10.2018 FR 1859605**

(43) Date de publication de la demande:
**22.04.2020 Bulletin 2020/17**

(73) Titulaire: **TRANSDEV GROUP INNOVATION 92130 Issy-les-Moulineaux (FR)**

(72) Inventeurs:
• **KARAOGUZ, Cem 91120 Palaiseau (FR)**
• **PHAM, Hoang-Lan 94240 L'Hay Les Roses (FR)**
• **BEAUVILLAIN, Alexis 91300 Massy (FR)**

• **LE CORNEC, Olivier 91120 Palaiseau (FR)**

(74) Mandataire: **Lavoix 2, place d'Estienne d'Orves 75441 Paris Cedex 09 (FR)**

(56) Documents cités:
**WO-A1-2015/185846**

• **ANDREI VATAVU ET AL: "Real-time environment representation based on Occupancy Grid temporal analysis using a Dense Stereo-Vision System", INTELLIGENT COMPUTER COMMUNICATION AND PROCESSING (ICCP), 2010 IEEE INTERNATIONAL CONFERENCE ON, IEEE, PISCATAWAY, NJ, USA, 26 août 2010 (2010-08-26), pages 203-209, XP031778203, ISBN: 978-1-4244-8228-3**

**Description**

La présente invention concerne un dispositif électronique de surveillance d'une scène via un ensemble de N capteur(s) électronique(s), tel(s) qu'une caméra stéréoscopique, un radar ou encore un dispositif de télédétection par laser, plus connu sous l'appellation lidar (de l'anglais *light détection and ranging*). N est un nombre entier supérieur ou égal à 1.

L'invention concerne aussi un procédé de surveillance de la scène via l'ensemble de N capteur(s) électronique(s), le procédé étant mis en oeuvre par un tel dispositif électronique de surveillance.

L'invention concerne également un programme d'ordinateur comportant des instructions logicielles qui, lorsqu'elles sont exécutées par un ordinateur, mettent en oeuvre un tel procédé de surveillance.

L'invention concerne notamment le domaine de la surveillance d'une infrastructure routière où des véhicules, des cyclistes et des piétons sont destinés à circuler, notamment des véhicules automobiles autonomes, en particulier des véhicules automobiles autonomes ayant un niveau d'automatisation (de l'anglais *level of automation*) supérieur ou égal à 3 selon le barème de l'Organisation Internationale des Constructeurs Automobiles (OICA). La scène surveillée est alors tout ou partie de l'infrastructure routière.

Dans le domaine de la surveillance d'une infrastructure routière, il est notamment important de pouvoir détecter un ou des changements au sein de l'infrastructure à l'aide d'un ou plusieurs capteurs électroniques, tels que des caméras stéréoscopiques, radars, lidars, etc. Cette surveillance vise à détecter des changements sur une période temporelle de durée variable, allant typiquement de quelques secondes à plusieurs heures, voire plusieurs jours ou semaines, les changements susceptibles d'être détectés étant par exemple :

- des objets mobiles,
- des dégradations (par exemple trous) de l'état de routes de l'infrastructure routière,
- des obstacles bloquant des entrées/sorties de l'infrastructure routière,
- des obstacles (par exemple arbres tombés, accumulation de neige) bloquant un segment de route de l'infrastructure routière,
- des places de stationnement de l'infrastructure routière, récemment occupées ou libérées,
- un stationnement illégal au sein de l'infrastructure routière.

L'article « Real-Time Environment Representation based on Occupancy Grid Temporal Analysis using a Dense Stereo-Vision System » de Vatavu et al décrit un dispositif électronique de surveillance d'une scène via un ensemble de caméras.

Le document WO 2015/185846 A1 concerne un procédé d'analyse d'une scène dynamique observée à l'aide d'un bloc de capteurs.

Il est alors connu de chercher à détecter de tels changements via une méthode communément appelée soustraction d'arrière-plan (de l'anglais *background subtraction*), notamment lorsque cette surveillance est faite à l'aide de caméras. L'article « Background subtraction techniques : a review » de Piccardi et al, dans 2004 IEEE International Conférence on Systems, Man and Cybernetics présente alors un panorama de différentes techniques de soustraction d'arrière-plan.

Toutefois, de telles techniques de soustraction d'arrière-plan ne sont pas très adaptées avec des capteurs autres qu'une caméra, notamment des radars ou des lidars.

Le but de l'invention est alors de proposer un dispositif électronique et un procédé associé de surveillance d'une scène via un ensemble de N capteur(s) électronique(s), permettant de détecter plus efficacement un changement de la scène, notamment lorsque le capteur est un radar ou un lidar.

A cet effet, l'invention a pour objet un dispositif électronique de surveillance selon la revendication 1.

Avec le dispositif électronique de surveillance selon l'invention, l'utilisation de grilles respectives d'occupation, d'une part pour la représentation courante de la scène, et d'autre part pour la représentation de référence de la scène (c'est-à-dire l'arrière-plan), puis le calcul de la grille différentielle en ignorant chaque zone de la grille d'occupation de référence à l'état occupé pour laquelle la zone correspondante de la grille d'occupation courante est à l'état libre, permet alors de détecter plus efficacement un changement dans la scène observée par le ou les capteurs, en particulier de diminuer les temps de calcul associés.

Ceci permet alors de détecter plus rapidement un tel changement. Ceci permet en outre d'effectuer une telle surveillance, y compris lorsque le capteur est un radar ou un lidar, même si ces capteurs délivrent généralement les données mesurées ou observées, sous forme de volumineux nuages de points.

Le traitement de tels nuages de points est alors généralement long avec les techniques de soustraction d'arrière-plan de l'état de la technique.

Suivant d'autres aspects avantageux de l'invention, le dispositif électronique de surveillance est selon l'une quelconque des revendications 2 à 7.

L'invention a également pour objet un procédé de de surveillance selon la revendication 8.

L'invention a également pour objet un programme d'ordinateur selon la revendication 9.

Ces caractéristiques et avantages de l'invention apparaîtront plus clairement à la lecture de la description qui va suivre, donnée uniquement à titre d'exemple non limitatif, et faite en référence aux dessins annexés, sur lesquels :

- la figure 1 est une représentation schématique d'un dispositif électronique de surveillance selon l'invention, configurée pour surveiller une scène, telle qu'une infrastructure routière ;
- la figure 2 est un organigramme d'un procédé, selon l'invention, de surveillance de la scène via un ensemble de capteurs électroniques ;
- les figures 3 à 5 sont des vues schématiques illustrant l'obtention d'une grille d'occupation correspondant à la scène, à partir de représentations de la scène acquises de plusieurs capteurs électroniques, la grille d'occupation comportant une pluralité de zones correspondant chacune à une portion respective de la représentation de la scène, chaque zone de la grille d'occupation étant à un état occupé si ladite portion contient un objet, et à un état libre sinon ;
- les figures 6 à 9 sont des vues illustrant la détermination d'une grille d'occupation de référence à partir de plusieurs grilles d'occupation précédentes, chacune résultant d'une représentation respective de la scène, acquise préalablement à la représentation courant associée à la grille d'occupation courante ;
- les figures 10 à 12 sont des vues schématiques illustrant le calcul d'une grille différentielle correspondant à la différence entre la grille d'occupation courante et la grille d'occupation de référence, pour différents exemples de grilles d'occupation courante et de référence,
- les figures 13 et 14 sont des vues illustrant la représentation d'une grille d'occupation sous la forme d'un arbre, et
- la figure 15 est une vue illustrant l'application d'un traitement ultérieur à la grille différentielle calculée en positionnant à l'état actif chaque noeud parent ayant au moins un noeud fils à l'état actif, depuis le niveau le plus bas de l'arbre jusqu'au niveau le plus élevé de l'arbre.

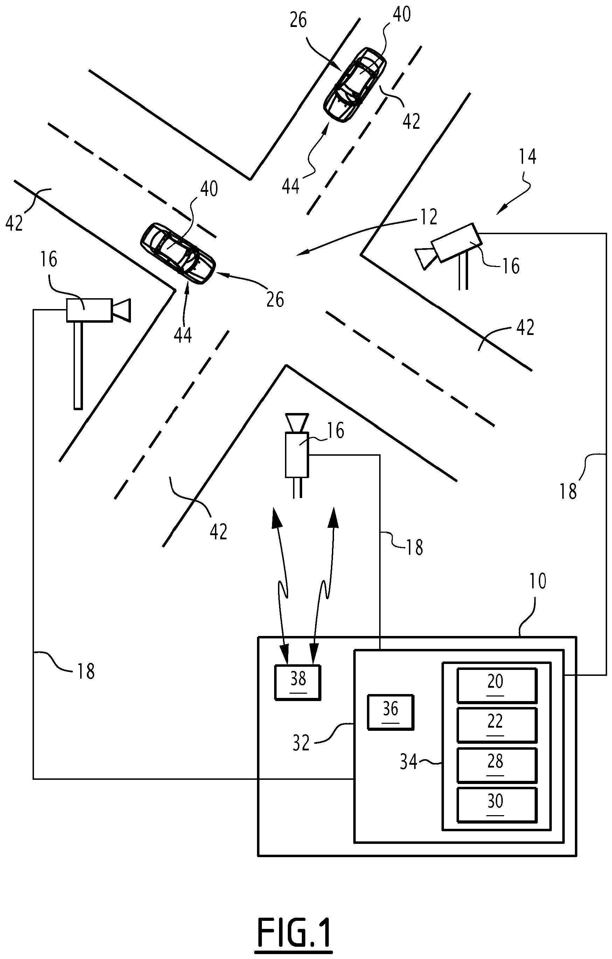

Sur la figure 1, un dispositif électronique de surveillance 10 est configuré pour surveiller une scène, telle qu'une infrastructure routière 12. Le dispositif électronique de surveillance 10 est destiné à être relié à un ensemble 14 de N capteur(s) 16 par l'intermédiaire d'une ou plusieurs liaisons de données 18.

Le dispositif électronique de surveillance 10 comprend un module d'acquisition 20 configuré pour acquérir, de la part de l'ensemble 14 de N capteur(s) 16, au moins une représentation de la scène.

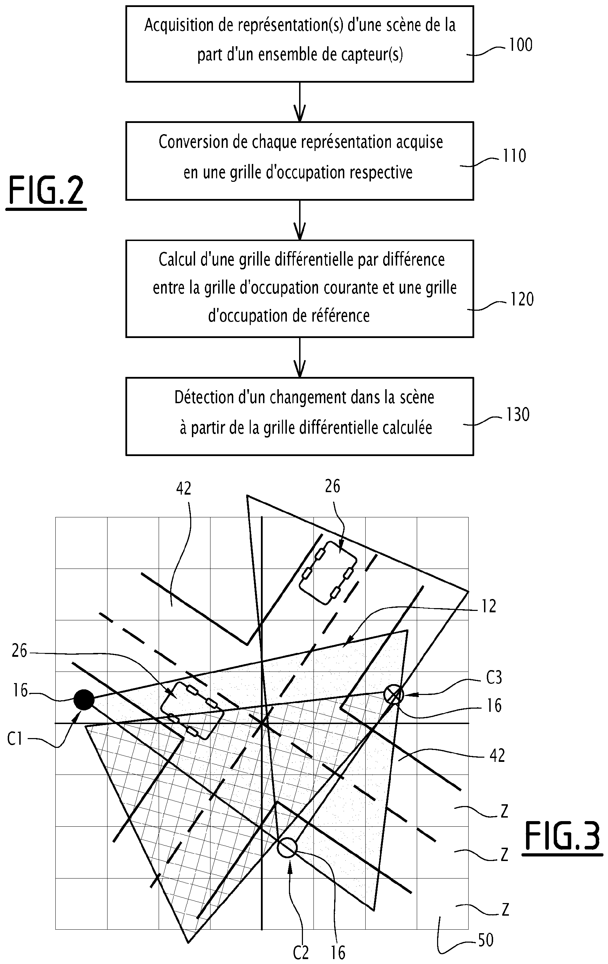

Le dispositif électronique de surveillance 10 comprend un module de conversion 22 configuré pour convertir chaque représentation acquise en une grille d'occupation respective G, chaque grille d'occupation G comportant une pluralité de zones Z, visibles sur les figures 3 à 12, chaque zone Z de la grille d'occupation G étant à un état occupé si ladite portion contient un objet 26 et à un état libre sinon.

Le dispositif électronique de surveillance 10 comprend également un module de calcul 28 configuré pour calculer une grille différentielle $\Delta G$ correspondant à une différence entre une grille d'occupation courante $G^{cur}$ et une grille d'occupation de référence $G^{ref}$.

Le dispositif électronique de surveillance 10 comprend un module de détection 30 configuré pour détecter un changement dans la scène à partir de la grille différentielle $\Delta G$ calculée par le module de calcul 28.

Dans l'exemple de la figure 1, le dispositif électronique de surveillance 10 comprend une unité de traitement d'information 32 formée par exemple d'une mémoire 34 et d'un processeur 36 associé à la mémoire 34.

Le dispositif électronique de surveillance 10 comprend un émetteur-récepteur 38, configuré notamment pour émettre, sous forme d'ondes radioélectriques, des données à destination d'un ou plusieurs véhicules automobiles autonomes 40 se trouvant à l'intérieur ou bien à proximité de l'infrastructure routière 12 surveillée par le dispositif électronique de surveillance 10.

L'infrastructure routière 12 comprend une ou plusieurs voies de circulation 42, chaque voie de circulation 42 permettant la circulation d'un élément de trafic 44, en particulier d'un véhicule automobile, tel qu'un véhicule automobile autonome 40, ou encore d'un cycliste ou d'un piéton. Dans l'exemple de la figure 1, l'infrastructure routière 12 est une zone d'intersection routière et comporte plusieurs voies de circulation 42.

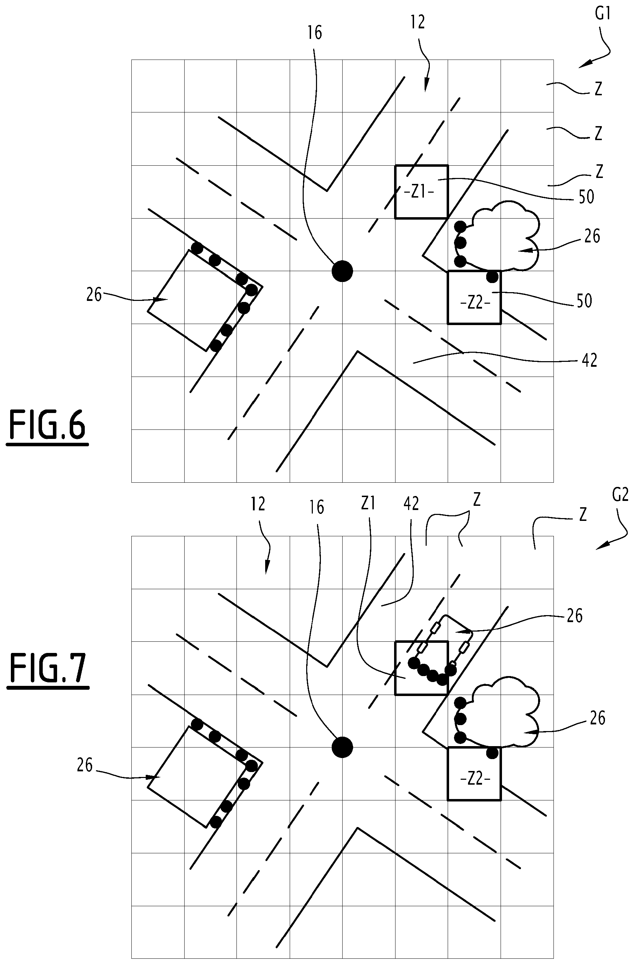

L'ensemble 14 comporte N capteur(s) électronique(s) 16, N étant un nombre entier supérieur ou égal à 1. Dans l'exemple des figures 1, 3 et 4, l'ensemble 14 comporte trois capteurs électroniques 16, et N est alors égal à 3. Dans l'exemple des figures 6 à 9, l'ensemble 14 comporte un unique capteur électronique 16, et N est alors égal à 1.

Chaque capteur électronique 16 est par exemple un dispositif de télédétection par laser, plus connu sous le nom de lidar (de l'anglais *light détection and ranging*), ou un radar (de l'anglais *radio détection and ranging*), ou encore une caméra stéréoscopique. Chaque capteur électronique 16 est connu en soi.

L'homme du métier comprendra que le ou les capteurs électroniques 16 de l'ensemble 14 sont par exemple tous de même type, par exemple tous des lidars, tous des radars ou encore tous des caméras stéréoscopiques.

En variante, l'ensemble 14 comporte un mélange de différents types de capteurs électroniques 16, avec par exemple au moins deux types distincts parmi lidar, radar et caméra stéréoscopique. Cette variante permet d'avoir une redondance de types de capteurs électroniques 16 et offre alors une fiabilité plus élevée.

Chaque capteur 16 est par exemple disposé en voirie à proximité ou à l'intérieur de la scène à surveiller, tel qu'à proximité ou à l'intérieur de l'infrastructure routière 12. Chaque capteur 16 est disposé le long d'une voie de circulation 42 dans l'exemple de la figure 1.

L'homme du métier comprendra de manière générale que le nombre de capteurs 16, qu'il s'agisse de lidar(s), de radar(s) ou encore de caméra(s) stéréoscopique(s), est choisi en adéquation avec la scène à surveiller, et par exemple en adéquation avec le nombre de voies de circulation 42 formant l'infrastructure routière 12.

Chaque capteur 16 est alors apte à effectuer une ou plusieurs mesures pour délivrer une représentation de la scène au module d'acquisition 20 correspondant.

Chaque liaison de données 18 entre un capteur électronique 16 respectif et le dispositif électronique de surveillance 10 est par exemple une liaison filaire, comme dans l'exemple de la figure 1, ou encore une liaison sans fil, telle qu'une liaison radioélectrique.

Dans l'exemple de la figure 1, le module d'acquisition 20, le module de conversion 22, le module de calcul 28 et le module de détection 30 sont réalisés chacun sous forme d'un logiciel, ou d'une brique logicielle, exécutable par le processeur 36. La mémoire 34 du dispositif électronique de surveillance 10 est alors apte à stocker un logiciel d'acquisition configuré pour acquérir - de la part de l'ensemble 14 de N capteur(s) 16 - au moins une représentation de la scène, un logiciel de conversion configuré pour convertir chaque représentation acquise en une grille d'occupation G respective, un logiciel de calcul configuré pour calculer la grille différentielle $\Delta G$ correspondant à la différence entre la grille d'occupation courante $G^{cur}$ et la grille d'occupation de référence $G^{ref}$, et un logiciel de détection configuré pour détecter un changement dans la scène à partir de la grille différentielle $\Delta G$ calculée par le logiciel de calcul. Le processeur 36 est alors apte à exécuter chacun des logiciels parmi le logiciel d'acquisition, le logiciel de conversion, le logiciel de calcul et le logiciel de détection.

En variante non représentée, la module d'acquisition 20, le module de conversion 22, le module de calcul 28 et le module de détection 30 sont réalisés chacun sous forme d'un composant logique programmable, tel qu'un FPGA (de l'anglais *Field Programmable Gate Array*), ou encore sous forme d'un circuit intégré dédié, tel qu'un ASIC (de l'anglais *Application Spécifie Integrated Circuit*), qu'un GPU (de l'anglais *Graphie Processing Unit*), ou encore qu'un GPGPU (de l'anglais *General-Purpose computing on Graphie Processing Unit).*

Lorsque le dispositif électronique de surveillance 10 est réalisé sous forme d'un ou plusieurs logiciels, c'est-à-dire sous forme d'un programme d'ordinateur, il est en outre apte à être enregistré sur un support, non représenté, lisible par ordinateur. Le support lisible par ordinateur est, par exemple, un medium apte à mémoriser les instructions électroniques et à être couplé à un bus d'un système informatique. A titre d'exemple, le support lisible est un disque optique, un disque magnéto-optique, une mémoire ROM, une mémoire RAM, tout type de mémoire non-volatile (par exemple EPROM, EEPROM, FLASH, NVRAM), une carte magnétique ou une carte optique. Sur le support lisible est alors mémorisé un programme d'ordinateur comportant des instructions logicielles.

Dans l'exemple de la figure 1, le module d'acquisition 20, le module de conversion 22, le module de calcul 28 et le module de détection 30 sont embarqués au sein de l'unique unité de traitement d'informations 32, c'est-à-dire au sein d'un même et unique calculateur électronique.

En variante, non représentée, le module d'acquisition 20 d'une part, et le module de conversion 22, le module de calcul 28 et le module de détection 30 d'autre part, sont embarqués au sein de deux calculateurs électroniques distincts et séparés.

Selon cette variante, le module d'acquisition 20 est par exemple disposé à proximité du ou des capteurs 16, en étant relié à chacun des capteurs 16, par une liaison de données 18. En complément facultatif, le module d'acquisition 20 est par exemple intégré à un capteur 16 correspondant.

Selon cette variante, le module de conversion 22, le module de calcul 28 et le module de détection 30 sont alors par exemple disposés au sein d'un calculateur de supervision, positionné de manière plus éloignée du ou des capteurs 16. Le calculateur de supervision est par exemple une plateforme d'un centre de contrôle. En complément facultatif, le calculateur de supervision est connecté à plusieurs modules d'acquisition 20, et la conversion de chaque représentation acquise en la grille d'occupation G respective est alors effectuée en fonction de chaque représentation acquise pour chacun des modules d'acquisition 20.

Le module d'acquisition 20 est configuré pour acquérir au moins une représentation de la scène de la part de l'ensemble 14 de N capteur(s) 16.

Lorsque l'ensemble 14 comporte plusieurs capteurs 16, le module d'acquisition 20 est configuré en particulier pour acquérir les représentations de la scène de la part des différents capteurs 16.

Dans l'exemple de la figure 3, l'ensemble 14 comporte trois capteurs 16, également référencés C1, C2, C3, et l'homme du métier pourra d'ailleurs observer que ces trois capteurs C1, C2, C3, dont les champs de vue respectifs sont chacun représentés schématiquement sous forme d'un triangle issu du capteur 16 correspondant sur la figure 3, permettent de couvrir une surface plus importante de surveillance qu'un unique capteur 16, même si leurs champs de vue se recouvrent partiellement.

Dans l'exemple de la figure 3, un premier capteur C1 est représenté sous la forme d'un disque plein, ou encore noir ; un deuxième capteur C2 est représenté sous la forme d'un disque vide, ou encore blanc ; et un troisième capteur C3 est représenté sous la forme d'un disque avec une croix.

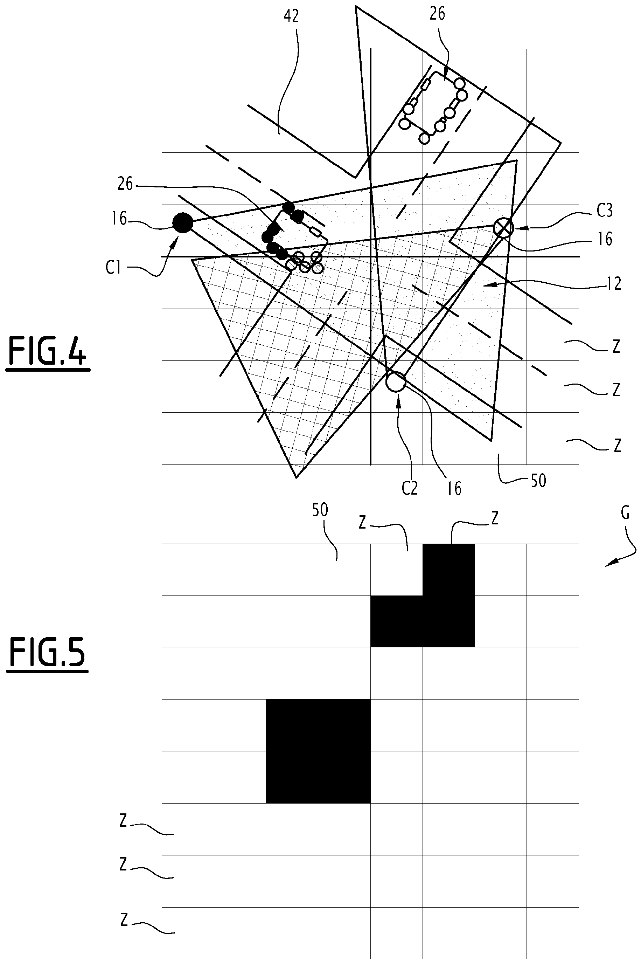

Dans l'exemple de la figure 4, le module d'acquisition 20 est alors configuré pour acquérir la représentation de la part de chacun des trois capteurs C1, C2, C3, en particulier les mesures issues du premier capteur C1, représentées sous la forme de points noirs sur la figure 4, ainsi que celles issues du deuxième capteur C2 représentées sous la forme de points blancs, et encore celles issues du troisième capteur C3 représentées sous la forme de points avec une croix.

Dans l'exemple des figures 3 et 4, les capteurs 16, notés C1, C2, C3, sont par exemple chacun un lidar, et les mesures acquises par le module d'acquisition 20 correspondent alors à des points d'impact de chaque lidar avec le ou les objets 26 se trouvant dans la scène.

Dans l'exemple des figures 6 à 9, l'ensemble 14 comporte un unique capteur 16, tel qu'un lidar, représenté sous la forme d'un disque plein, ou encore noir. Le module d'acquisition 20 est alors configuré pour acquérir l'ensemble des mesures effectuées par ce capteur 16 à chaque instant temporel d'acquisition, les figures 6 à 9 correspondant à des instants temporels successifs d'acquisition, et les mesures effectuées étant - de la même manière - représentées par des points noirs sur les figures 6 à 9.

Le module de conversion 22 est configuré pour convertir chaque représentation acquise en la grille d'occupation G respective, chaque zone Z de la grille d'occupation G étant à un état occupé si la portion de la représentation correspondant à cette zone Z contient un objet 26 et à un état libre sinon.

Lorsque l'ensemble 14 comporte plusieurs capteurs 16, le module de conversion 22 est configuré pour convertir l'ensemble des représentations acquises en la grille d'occupation G respective, chaque zone Z de la grille d'occupation G étant alors à l'état occupé si la portion correspondant à cette zone Z contient un objet 26 pour au moins l'une des représentations acquises, et à l'état libre sinon. Autrement dit, lorsque l'ensemble 14 comporte plusieurs capteurs 16, le module de conversion 22 est configuré pour positionner la valeur d'une zone Z de la grille d'occupation G à l'état libre seulement si la portion correspondant à cette zone Z ne contient aucun objet 26 pour toutes les représentations acquises par le module d'acquisition 20 de la part de la pluralité de capteurs 16.

La figure 5 illustre alors la grille d'occupation G obtenue à partir de l'exemple de la figure 4, chaque zone Z étant par exemple en forme d'un carré, et chaque zone Z qui est à l'état occupé étant par convention dans cet exemple remplie en noir, chaque zone à l'état libre étant remplie en blanc. L'homme du métier observera alors que la grille d'occupation G de la figure 5 comporte sept zones Z à l'état occupé, trois premières zones Z (formant un L renversé) à l'état occupé découlant de la représentation de la scène acquise de la part du deuxième capteur C2, deux autres zones Z à l'état occupé découlant de la représentation acquise de la part du premier capteur C1, ces zones à l'état occupé correspondant aux deux zones supérieures du carré de quatre zones sur la figure 5, et enfin deux dernières zones Z à l'état occupé découlant de la représentation acquise de la part du troisième capteur C3, ces deux zones à l'état occupé correspondant à la partie inférieure du carré précité de quatre zones.

En variante ou en complément, le module de conversion 22 est configuré pour convertir chaque représentation acquise de la part des différents capteurs 16 en une grille intermédiaire d'occupation $G^{int}$ pour chaque capteur 16, puis pour combiner les grilles intermédiaires d'occupation $G^{int}$ en la grille d'occupation G respective pour ladite scène.

Chaque zone Z correspond à une unique cellule de mesure du ou des capteurs 16 correspondants, ou encore à une pluralité de cellules de mesure du ou des capteurs 16 correspondants. Lorsque le capteur 16 est un lidar, ou respectivement un radar, une cellule de mesure correspond par exemple à la mesure résultant de l'émission d'un faisceau lidar, ou respectivement d'un faisceau radar. Lorsque le capteur 16 est une caméra stéréoscopique, la cellule de mesure correspond par exemple à un pixel d'un photodétecteur matriciel de la caméra.

Chaque zone Z d'une grille d'occupation $G^{cur}$, $G^{ref}$ ou de la grille différentielle $\Delta G$, comporte alors une unique cellule 50 ou bien un agrégat 24 de plusieurs cellules 50, chaque cellule 50 correspondant à une cellule de mesure respective du ou des capteurs 16 correspondants.

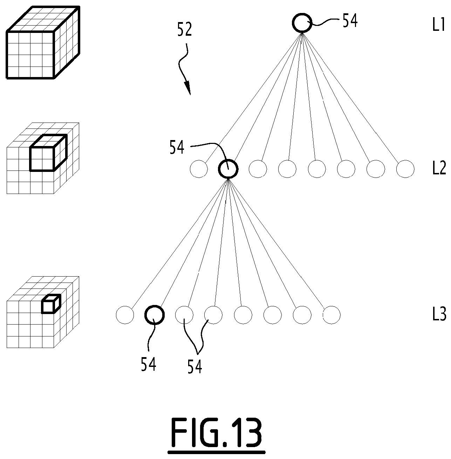

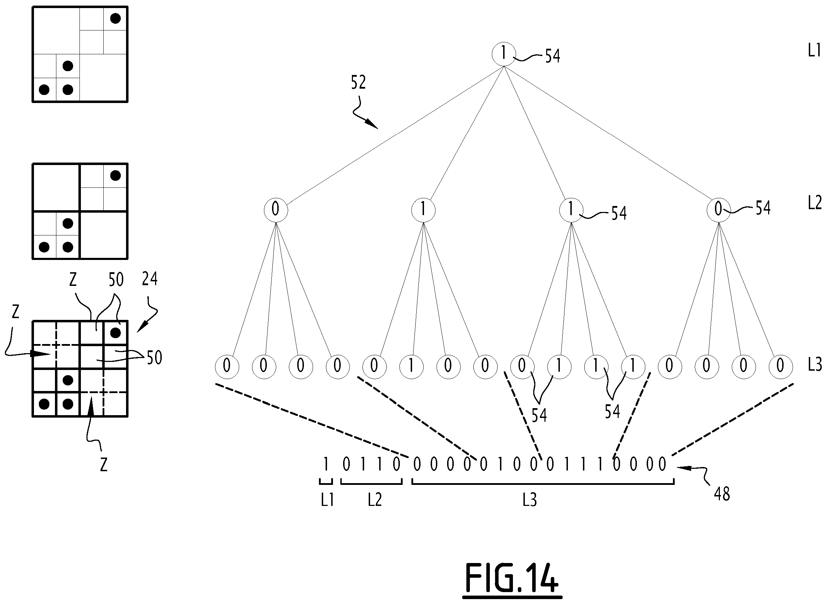

Chaque grille d'occupation $G^{cur}$, $G^{ref}$, ainsi que la grille différentielle $\Delta G$, est une grille multidimensionnelle, c'est-à-dire une grille en deux dimensions, comme dans l'exemple de la figure 14, ou encore une grille en trois dimensions comme dans l'exemple de la figure 13.

Lorsque la grille est une grille en deux dimensions, chaque zone Z est de préférence alors en forme d'un polygone, par exemple d'un rectangle ou encore d'un carré, comme représenté sur les figures 3 à 12.

De manière analogue, lorsque la grille multidimensionnelle est une grille en trois dimensions, chaque zone Z est par exemple en forme d'un polyèdre, tel qu'un parallélépipède rectangle ou un cube.

Chaque objet 26 susceptible d'être surveillé par le dispositif de surveillance 10 et appartenant à la scène est par exemple un objet mobile, tel qu'un élément de trafic 44, ou encore un objet statique, tel qu'un bâtiment ou un élément de végétation, le long d'une voie de circulation 42 respective.

L'homme du métier comprendra que par « objet », on entend de manière générale tout élément susceptible d'être repéré par un capteur électronique 16 respectif, c'est-à-dire notamment tout élément apte à réfléchir un faisceau émis par le capteur 16, qu'il s'agisse d'un lidar ou encore d'un radar, ou encore tout élément apte à être repéré par une caméra stéréoscopique.

Le module de calcul 28 est configuré pour calculer la grille différentielle $\Delta G$ correspondant à la différence entre la grille d'occupation courante $G^{cur}$ et la grille d'occupation de référence $G^{ref}$, notamment en ignorant chaque zone Z de la grille d'occupation de référence $G^{ref}$ qui est à l'état occupé et pour laquelle la zone Z correspondante de la grille d'occupation courante $G^{cur}$ est à l'état libre.

En complément facultatif, le module de calcul 28 est configuré pour calculer la grille différentielle $\Delta G$ en ignorant chaque zone Z de la grille d'occupation de référence $G^{ref}$ pour laquelle la zone Z correspondante de la grille d'occupation courante $G^{cur}$ est à l'état libre.

La grille différentielle $\Delta G$ comporte une pluralité de zones Z correspondant chacune à une portion respective de la représentation de la scène, chaque zone Z de la grille différentielle $\Delta G$ étant à un état actif ou bien à un état inactif.

En complément facultatif, le module de calcul 28 est configuré pour calculer une zone Z respective de la grille différentielle $\Delta G$ à l'état actif seulement si la zone Z correspondante de la grille d'occupation courante $G^{cur}$ est à l'état occupé et si la zone correspondante Z de la grille d'occupation de référence $G^{ref}$ est à l'état libre.

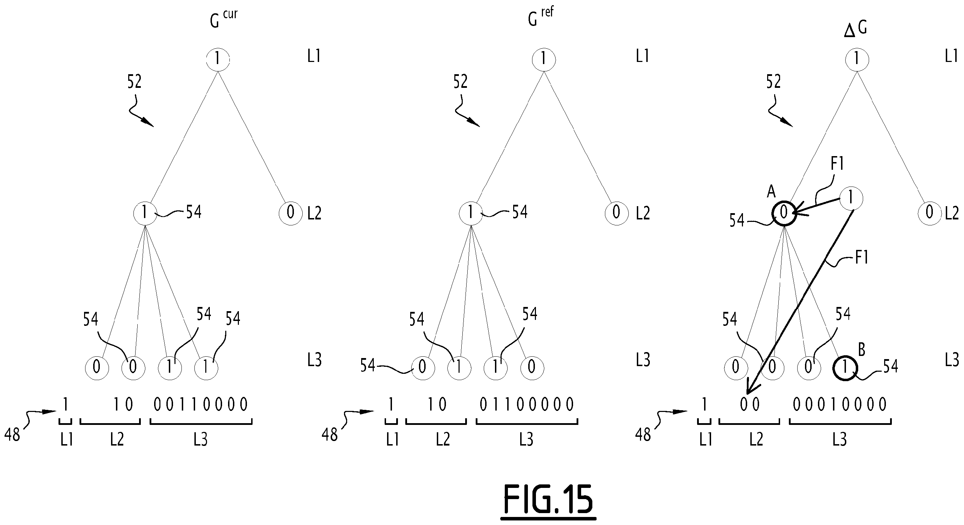

Les grilles d'occupation $G^{cur}$, $G^{ref}$ et la grille différentielle $\Delta G$ sont, par exemple, chacune en forme d'une chaîne 48 de bits, chaque bit étant associé à une zone Z ou à une cellule 50 respective, comme représenté dans l'exemple des figures 14 et 15.

En complément facultatif, le module de calcul 28 est par exemple configuré pour calculer la grille différentielle $\Delta G$ selon le tableau 1 suivant :

[Tableau 1]

| $B^{cur}$ | | $B^{ref}$ | $\Delta B$ |
|---|---|---|---|
| 0 | | 0 | 0 |
| 0 | | 1 | 0 |
| 1 | | 0 | 1 |
| 1 | | 1 | 0 |

où $B^{cur}$ et $B^{ref}$ représentent un bit de la grille d'occupation courante et respectivement un bit correspondant de la grille d'occupation de référence, le bit 0 désignant l'état libre et le bit 1 désignant l'état occupé, et

$\Delta B$ représente le bit de la grille différentielle associé aux bits respectifs $B^{cur}$ et $B^{ref}$, le bit 0 désignant l'état inactif et le bit 1 désignant l'état actif.

En variante, le module de calcul 28 est configuré pour calculer la grille différentielle $\Delta G$ selon l'équation suivante :

$$\Delta P = \begin{cases} 1 & si\ P^{cur} - P^{ref} > \beta \\ 0 & sinon \end{cases} \qquad (1)$$

où $P^{cur}$ et $P^{ref}$ représentent une probabilité qu'une zone Z correspondante de la grille d'occupation courante soit occupée, et respectivement une probabilité que la même zone Z de la grille d'occupation de référence soit occupée, avec $0 \leq P^{cur} \leq 1$ et $0 \leq P^{ref} \leq 1$,

$\Delta P$ représente le statut de ladite zone Z de la grille différentielle $\Delta G$ associée aux probabilités respectives $P^{cur}$ et $P^{ref}$, la valeur 0 désignant l'état inactif et la valeur 1 désignant l'état actif, et

$\beta$ est une valeur décimale strictement comprise entre 0 et 1, $0 < \beta < 1$.

Selon cette variante, le ou les capteurs électroniques 16 sont modélisés de manière probabiliste. A chaque mesure effectuée par le capteur 16 correspondant est assignée une probabilité d'occupation de la zone Z correspondante en fonction de la distance de la zone Z au capteur 16, au lieu d'assigner une valeur binaire, telle que 1 pour un impact lidar ou radar. La probabilité associée à la mesure effectuée par le capteur 16 est par exemple égale à 1 pour un objet 26 détecté dans une zone Z proche du capteur 16, à 0,9 pour un objet 26 détecté dans une zone Z un peu plus éloignée du capteur 16, à 0,8 pour un objet 26 détecté dans une zone Z encore plus éloignée du capteur 16, et ainsi de suite. La probabilité 0 correspond à une absence de détection d'objet pour la zone Z correspondante. Les valeurs de probabilité $P^{cur}$ et $P^{ref}$ sont par exemple prédéfinies par plages successives de valeurs de distance entre la zone Z et le capteur 16 considéré.

La grille d'occupation de référence $G^{ref}$ est par exemple une grille d'occupation résultant d'une unique représentation acquise à un instant temporel préalable, c'est-à-dire antérieur, à celui de la représentation courante associée à la grille d'occupation courante Geur.

En variante, la grille d'occupation de référence G$^{ref}$ est une grille d'occupation résultant de plusieurs représentations acquises successivement et préalablement à la représentation courante associée à la grille d'occupation courante G$^{cur}$, c'est-à-dire acquise à des instants temporels successifs et antérieurs à celui de la représentation courante. Les figures 6 à 9 illustrent alors un tel exemple de calcul de la grille d'occupation de référence G$^{ref}$ par le module de calcul 28, les figures 6 à 9 correspondant à des représentations successives de la scène pour des instants temporels successifs.

Selon cette variante, le module de calcul 28 est alors par exemple configuré pour calculer la grille d'occupation de référence G$^{ref}$ en effectuant une moyenne de plusieurs grilles d'occupation précédentes G1, G2, G3, G4, chacune résultant d'une représentation respective acquise préalablement à la représentation courante associée à la grille d'occupation courante G$^{cur}$.

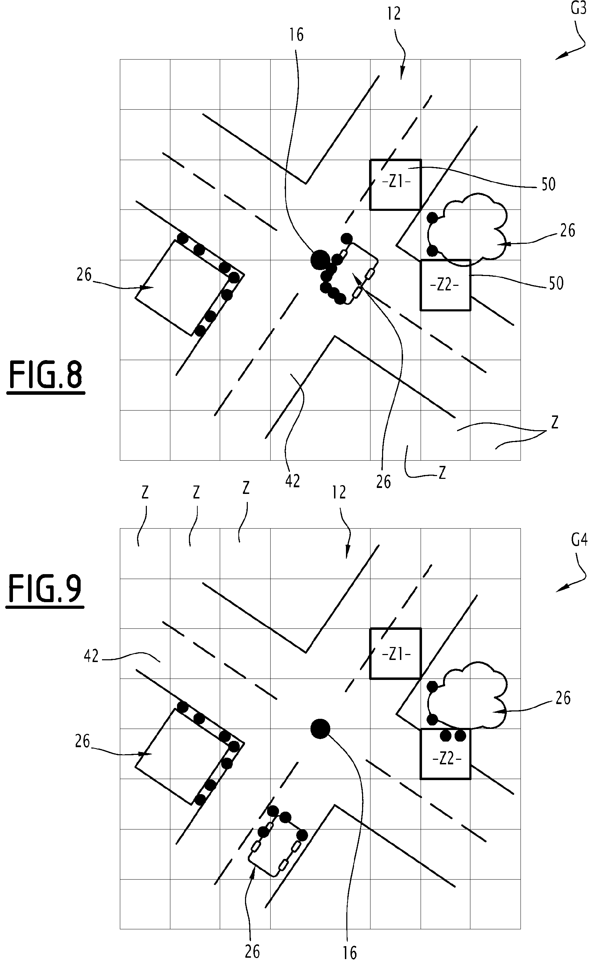

Dans l'exemple des figures 6 à 9, le nombre de grilles d'occupation précédentes prises en compte pour calculer la grille d'occupation de référence G$^{ref}$ est égal à 4, à savoir une première grille G1 (figure 6) correspondant à un premier instant temporel d'acquisition t1, une deuxième grille G2 (figure 7) correspondant à un deuxième instant temporel d'acquisition t2, postérieur au premier instant d'acquisition t1, une troisième grille G3 (figure 8) correspondant à un troisième instant temporel d'acquisition t3, postérieur aux premier et deuxième instants temporels d'acquisition, t1, t2, et enfin une quatrième grille G4 (figure 9) correspondant à un quatrième instant temporel d'acquisition t4, postérieur aux instants temporels t1, t2 et t3.

Le module de calcul 28 est alors configuré pour effectuer une moyenne de la pluralité de grilles d'occupation précédentes G1, G2, G3, G4, de préférence zone Z par zone Z, comme cela va être expliqué par la suite dans l'exemple des figures 6 à 9 avec deux zones Z, notées respectivement Z1, Z2.

Dans l'exemple des figures 6 à 9, pour la représentation acquise au premier instant temporel t1, visible sur la figure 6, la première zone Z1 ne comporte aucun objet 26, alors que la deuxième zone Z2 comporte une partie du feuillage d'un arbre, de sorte que pour la première grille d'occupation précédente G1, la première zone Z1 est à l'état libre et la deuxième zone Z2 est à l'état occupé. Pour la représentation acquise au deuxième instant temporel t2, visible sur la figure 7, un véhicule se trouve dans la portion de la représentation correspondant à la première zone Z1, et une partie du feuillage de l'arbre se trouve encore dans la portion de représentation correspondant à la deuxième zone Z2, de sorte que pour la deuxième grille d'occupation précédente G2, les première et deuxième zones Z1, Z2 sont chacune à l'état occupé. Pour la représentation correspondant au troisième instant d'acquisition t3, visible sur la figure 8, le véhicule ne se trouve plus dans la portion correspondant à la première zone Z1, et aucun autre objet 26 n'est détecté dans cette zone, et le feuillage de l'arbre ne se trouve également plus dans la portion de la représentation correspondant à la deuxième zone Z2 et aucun autre objet 26 ne s'y trouve, de sorte que pour la troisième grille d'occupation précédente G3, les première et deuxième zones Z1, Z2 sont chacune à l'état libre. Enfin, pour la représentation correspondant au quatrième instant d'acquisition t4, visible sur la figure 9, la portion correspondant à la première zone Z1 ne comporte encore aucun objet 26, tandis que la portion correspondant à la deuxième zone Z2 comporte à nouveau une partie du feuillage de l'arbre. Pour la quatrième grille d'occupation précédente G4, la zone Z1 est alors à l'état libre, tandis que la deuxième zone Z2 est à l'état occupé. Les états des première et deuxième zones Z1, Z2 pour les différents instants d'acquisition t1 à t4 sont alors listés dans le tableau 2 suivant, où la première colonne est la colonne des différents instants d'acquisition, la deuxième colonne correspond à la première zone Z1 et la dernière colonne correspond à la deuxième zone Z2, une zone ayant, par convention, dans ce tableau la valeur 0 lorsqu'elle est à l'état libre et la valeur 1 lorsqu'elle est à l'état occupé.

[Tableau 2]

| t | Z1 | Z2 |
|----|----|----|
| t1 | 0 | 1 |
| t2 | 1 | 1 |
| t3 | 0 | 0 |
| t4 | 0 | 1 |

Le module de calcul 28 est alors par exemple configuré pour effectuer une moyenne quadratique des différents états successifs de chaque zone des grilles d'occupation précédentes, par exemple selon l'équation suivante :

$$\overline{G}_J = \frac{1}{N} \sum_{i=1}^{N} G_{j,i} \qquad (2)$$

où i est un indice entier de valeur comprise entre 1 et N désignant la grille d'occupation précédente Gi prise en compte,

j est un indice entier désignant la zone Z considérée de la grille d'occupation précédente Gi prise en compte,

N est le nombre grille d'occupation précédente Gi prises en compte pour calculer la grille d'occupation de référence $G^{ref}$,

Gj,i représente la valeur, égale à 0 pour l'état libre ou à 1 pour l'état occupé, de la zone Z d'indice j de la grille d'occupation précédente Gi d'indice i, et

$\overline{G_J}$ représente la valeur moyenne calculée pour la zone Z d'indice j.

Le module de calcul 28 est ensuite configuré pour déterminer la valeur binaire, c'est-à-dire l'état, de la zone correspondante dans la grille d'occupation de référence $G^{ref}$ en comparant la valeur moyenne obtenue pour ladite zone avec un premier seuil $S_1$, ladite zone de la grille d'occupation de référence $G^{ref}$ étant par exemple à l'état occupé si la valeur moyenne est supérieure audit premier seuil $S_1$ prédéfini et à l'état libre sinon, selon l'équation suivante :

$$G_j^{ref} = \begin{cases} 1 & si \ \overline{G_J} > S_1 \\ 0 & sinon \end{cases} \quad\quad (3)$$

où $\overline{G_J}$ représente la valeur moyenne calculée pour la zone Z d'indice j,

$S_1$ désigne le premier seuil, et

$G_j^{ref}$ représente la valeur calculée pour la zone Z d'indice j de la grille d'occupation de référence $G^{ref}$, la valeur 0 correspondant à l'état libre et la valeur 1 à l'état occupé.

Avec une moyenne calculée selon l'équation (2), la valeur obtenue dans l'exemple des figures 6 à 9 est alors précisée dans le tableau 3 ci-après.

[Tableau 3]

| t | Z1 | Z2 |
|---|---|---|
| t1 | 0 | 1 |
| t2 | 1 | 1 |
| t3 | 0 | 0 |
| t4 | 0 | 1 |
| $\overline{G_J}$ | 0,25 | 0,75 |
| $S_1$ | 0,5 | 0,5 |
| $G_j^{ref}$ | 0 | 1 |

En variante, le module de calcul 28 est configuré pour effectuer une moyenne pondérée des états, représentés chacun sous forme d'une valeur binaire, successifs de chaque zone Z des grilles d'occupation précédentes G1 à G4, en appliquant un poids $w_i$ à chaque valeur binaire successive pour la zone Z correspondante, le poids $w_i$ ayant de préférence une valeur plus importante pour les dernières représentations acquises parmi la pluralité de représentations acquises successivement et préalablement à la représentation courante.

Le module de calcul 28 est alors par exemple configuré pour calculer la valeur moyenne de chaque zone selon l'équation suivante :

$$\overline{G_J} = \frac{1}{N} \sum_{i=1}^{N} w_i \cdot G_{j,i} \quad\quad (4)$$

où i, j, N, Gj,i et $\overline{G_J}$ représentent les mêmes variables que celles définies précédemment pour l'équation (2), et $w_i$ représente le poids appliqué à la valeur Gj,i ;

le poids appliqué $w_i$ vérifiant par exemple l'équation suivante :

$$w_i = 1 - \frac{1}{t_i} \quad\quad (5)$$

Le module de calcul 28 est ensuite, de manière analogue, configuré pour calculer la valeur binaire, c'est-à-dire l'état, de chaque zone Z de la grille d'occupation de référence $G^{ref}$ en comparant la valeur moyenne ainsi calculée pour la zone Z correspondante avec un deuxième seuil $S_2$, ladite zone de la grille d'occupation de référence $G^{ref}$ étant par exemple à l'état occupé si la valeur moyenne est supérieure audit deuxième seuil $S_2$ prédéfini et à l'état libre sinon, selon l'équation suivante :

$$G_j^{ref} = \begin{cases} 1 & si\ \overline{G_J} > S_2 \\ 0 & sinon \end{cases} \tag{6}$$

où $\overline{G_J}$ représente la valeur moyenne calculée pour la zone Z d'indice j,

$S_2$ désigne le deuxième seuil, et

$G_j^{ref}$ représente la valeur calculée pour la zone Z d'indice j de la grille d'occupation de référence $G^{ref}$, la valeur 0 correspondant à l'état libre et la valeur 1 à l'état occupé ;

le deuxième seuil $S_2$ vérifiant par exemple l'équation suivante :

$$S_2 = \frac{1}{N} \sum_{i=1}^{N} w_i \cdot 0{,}5 \tag{7}$$

où $w_i$ représente le poids appliqué à la valeur Gj,i.

Avec une moyenne calculée selon l'équation (4), la valeur obtenue dans l'exemple des figures 6 à 9 est alors précisée dans le tableau 4 ci-après.

[Tableau 4]

| $t_i$ | $w_i$ | Z1 | Z2 |
|---|---|---|---|
| 1 | 0 | 0 | 1 |
| 2 | 0,5 | 1 | 1 |
| 3 | 0,6 | 0 | 0 |
| 4 | 0,75 | 0 | 1 |
| $\overline{G_J}$ | - | 0,125 | 0,3125 |
| $S_2$ | - | 0,23125 | 0,23125 |
| $G_j^{ref}$ | | 0 | 1 |

Cette variante permet alors de donner plus d'importance, dans la grille d'occupation de référence $G^{ref}$, aux représentations qui ont été acquises aux instants temporels les plus récents parmi les différentes représentations acquises prises en compte pour calculer ladite grille d'occupation de référence $G^{ref}$.

L'homme du métier observera alors que, dans les exemples décrits précédemment au regard des figures 3 à 5 pour la conversion des représentations acquises de plusieurs capteurs 16 en la grille d'occupation $G^{cur}$, $G^{ref}$ correspondante d'une part, et au regard des figures 6 à 9 pour le calcul de la grille d'occupation de référence $G^{ref}$ d'autre part, chaque zone Z considérée est une zone unicellulaire, c'est-à-dire une zone Z comportant une unique cellule 50. L'homme du métier comprendra alors que lorsque la zone Z comporte l'agrégat 24 de plusieurs cellules 50, les opérations qui ont décrites précédemment pour la zone unicellulaire Z doivent alors être effectuées pour l'agrégat 24 de cellules 50. S'il y a au moins une cellule 50 occupée dans l'agrégat 24, la zone Z correspondant à l'agrégat 24 est considéré comme occupée. Sinon, la zone Z correspondant à l'agrégat 24 est considéré comme libre, c'est-à-dire non-occupée.

En complément facultatif, les grilles d'occupation courante $G^{cur}$ et de référence $G^{ref}$, ainsi que la grille différentielle $\Delta G$, sont chacune représentées sous forme d'un arbre 52, visible sur la figure 13, chaque arbre 52 comportant une pluralité de noeuds 54 répartis en plusieurs niveaux L1, L2, L3, chaque noeud 54 correspondant à une zone Z respective, un noeud fils étant relié à un unique noeud parent de niveau supérieur.

Dans l'exemple de la figure 13, le niveau le plus élevé est un premier niveau L1, et l'arbre 52 comporte en outre un deuxième niveau L2 correspondant à un niveau intermédiaire, ainsi qu'un troisième niveau L3 correspondant au niveau le plus bas. Dans cet exemple de la figure 13, chaque noeud 54 du niveau le plus bas L3 est ainsi relié à un unique noeud parent de niveau supérieur, c'est-à-dire du deuxième niveau L2, et de manière analogue, chaque noeud 54 du deuxième niveau L2 est relié à un unique noeud parent de niveau supérieur, c'est-à-dire au noeud 54 du premier niveau L1.

L'arbre 52 comporte plusieurs niveaux L1, L2, L3, et de préférence trois niveaux, comme dans l'exemple des figures 13 à 15.

Avec la représentation sous forme de l'arbre 52, chaque noeud 54 du niveau le plus bas L3 correspond de préférence à une unique cellule 50 respective.

La représentation sous forme de l'arbre 52 de la figure 13 est également connue sous l'appellation anglaise *octree,* et est par exemple décrite dans l'article intitulé « Octree encoding: A new technique for the representation, manipulation and display of arbitrary 3D objects by computer » de Donald J. R. Meagher, publié en octobre 1980 dans Image Processing Laboratory.

L'homme du métier observera alors que la représentation *octree* permet de représenter à la fois un volume en trois dimensions comme représenté sur la figure 13, où chaque volume entouré en gras est associé au noeud 54 cerclé de gras dans l'arbre 52 correspondant, ou encore d'une surface comme représenté sur la figure 14.

Le module de calcul 28 est de préférence configuré pour calculer la grille différentielle $\Delta G$ en comparant des zones Z d'échelle identique pour la grille d'occupation courante $G^{cur}$ et la grille d'occupation de référence $G^{ref}$, mais les zones comparées Z n'ont pas nécessairement la même résolution, c'est-à-dire le même nombre de cellules 50, entre la grille d'occupation courante $G^{cur}$ et la grille d'occupation de référence $G^{ref}$. Une échelle identique entre les deux zones Z correspond par exemple à un niveau identique parmi les niveaux L1, L2, L3 de l'arbre 52 pour ces deux zones Z.

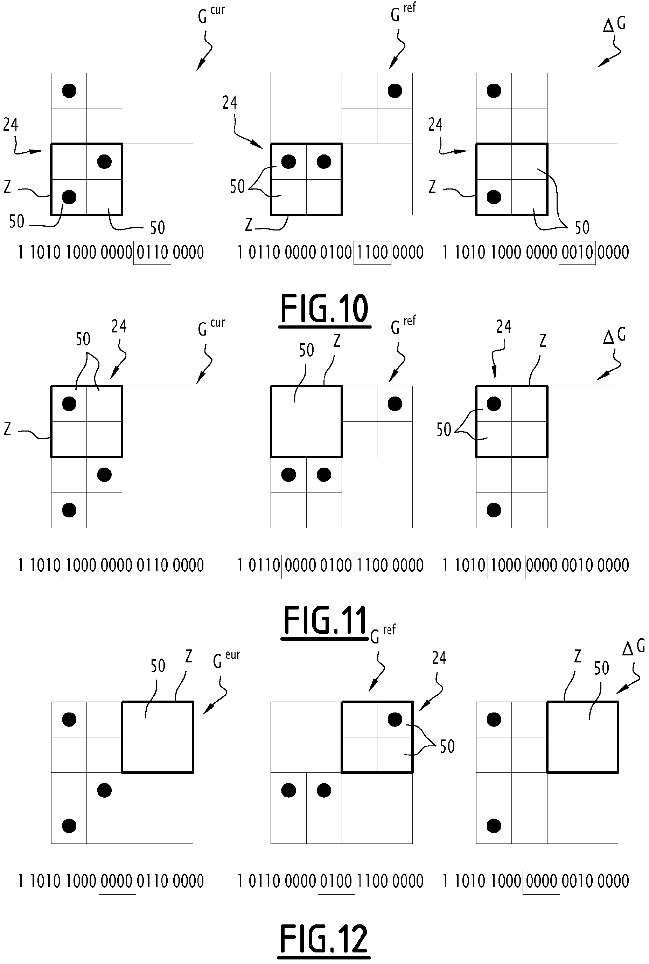

Les figures 10 à 12 illustrent alors les trois cas possibles, avec la figure 10 correspondant au cas où la résolution de la zone Z de la grille d'occupation courante $G^{cur}$ est identique à celle de la zone Z de la grille d'occupation de référence $G^{ref}$, la figure 11 correspondant au cas où la résolution de la zone Z de la grille d'occupation courante $G^{cur}$ est supérieure à celle de la zone Z de la grille d'occupation de référence $G^{ref}$, et enfin la figure 12 correspondant au cas où la résolution de la zone Z de la grille d'occupation courante $G^{cur}$ est inférieure à celle de la zone Z de la grille d'occupation de référence $G^{ref}$.

Lorsque la résolution de la zone Z de la grille d'occupation courante $G^{cur}$ et celle de la zone Z de la grille d'occupation de référence $G^{ref}$ sont identiques, le calcul de la grille différentielle $\Delta G$ découle de ce qui précède, avec un calcul effectué en comparant les cellules 50 une à une, par exemple selon le tableau 1 ou l'équation (1).

Lorsque la résolution de la zone Z de la grille d'occupation courante $G^{cur}$ est distincte de celle de la zone Z de la grille d'occupation de référence $G^{ref}$, comme dans l'exemple des figures 11 et 12, le module de calcul 28 est par exemple configuré pour représenter chaque zone Z de la grille d'occupation de référence $G^{ref}$ et de la grille d'occupation courante $G^{cur}$ sous forme d'un codage, où le nombre de bits est identique pour la zone Z de la grille d'occupation courante $G^{cur}$ et pour celle de la grille d'occupation de référence $G^{ref}$. Dans l'exemple des figures 11 et 12, chaque zone Z considérée, entourée d'un encadré en gras, est alors représentée sous la forme d'un codage à quatre bits, comme illustré avec les bits en gras.

Dans cet exemple, le module de calcul 28 est alors configuré pour effectuer le calcul de la grille différentielle $\Delta G$ en déterminant l'état résultant de chaque zone Z de la grille différentielle $\Delta G$ via un calcul bit à bit, c'est-à-dire cellule 50 par cellule 50.

Dans l'exemple de la figure 11, la cellule en haut à gauche de la zone Z de la grille différentielle $\Delta G$ est ainsi à l'état actif, étant donné que la cellule correspondante de la grille d'occupation courante $G^{cur}$ est à l'état occupé et que le bit associé de la grille d'occupation de référence pour cette zone Z est à l'état libre, ce qui correspond alors à la troisième ligne du tableau 1 précédent, ou encore à la première condition de l'équation (1) précédente.

De manière analogue, dans l'exemple de la figure 12, la zone Z résultante de la grille différentielle $\Delta G$ est à l'état inactif, étant donné que tous les bits la composant sont eux-mêmes à l'état inactif. En particulier, dans le cas de la cellule en haut à droite de la zone Z de la grille d'occupation de référence $G^{ref}$, le bit résultant de la zone Z de la grille différentielle $\Delta G$ est à l'état inactif, étant donné que le bit correspondant de la zone Z de la grille d'occupation courante $G^{cur}$ est à l'état libre pendant que celui de la zone Z de la grille d'occupation de référence $G^{ref}$ est à l'état occupé, ce qui correspond alors à la deuxième ligne du tableau 1 précédent, ou encore à la deuxième condition de l'équation (1) précédente.

Le module de calcul 28 est de préférence configuré pour utiliser la représentation 52, telle que représentée à la figure 14, avec la chaîne de bits 48 associée, pour coder chaque zone Z des grilles d'occupation courante $G^{cur}$ et de référence $G^{ref}$, ainsi que de la grille différentielle $\Delta G$. L'homme du métier observera en outre que les noeuds 54 du niveau le plus bas L3 correspondent dans l'exemple de la figure 14 chacun à une cellule 50, et même si une zone Z respective comporte une unique cellule, alors sa représentation sous forme de noeuds 54 et de bits est identique à celle des autres zones Z ayant le plus grand nombre de cellules 50 afin, comme expliqué précédemment, de calculer la grille différentielle $\Delta G$ malgré les différences de résolution entre zones Z comparées. Dans l'exemple de la figure 14, deux zones Z comportent alors une unique cellule 50 tout en étant représentées sous la forme de quatre noeuds 54 et de quatre bits associés dans la chaîne de bits 48, cette séparation en quatre bits des deux zones Z unicellulaires étant représentée sous forme de traits pointillés sur la figure 14 afin de faciliter l'explication, même si la zone Z comporte une unique cellule 50.

En complément facultatif, le module de calcul 28 est configuré en outre pour appliquer un traitement ultérieur à la grille différentielle calculée $\Delta G$ en positionnant à l'état actif chaque noeud 54 parent ayant au moins un noeud fils à l'état actif, depuis le niveau le plus bas L3 jusqu'au niveau le plus élevé L1.

Dans l'exemple de la figure 15, à l'issue du calcul effectué à l'aide du tableau 1, ou encore de l'équation (1), le noeud 54 repéré par la lettre A présente pour la grille différentielle $\Delta G$ la valeur 0 correspondant à l'état inactif, puisque les noeuds 54 correspondant de la grille d'occupation $G^{cur}$ et de référence $G^{ref}$ ont chacun la valeur 1 correspondant à un état occupé, l'état libre résultant pour le noeud A de la grille différentielle $\Delta G$ découlant alors de la quatrième ligne du tableau 1, ou encore de la deuxième condition de l'équation (1). De manière similaire, le noeud 54, noté B, de la grille différentielle $\Delta G$ est à l'état actif, correspondant à la valeur 1, puisque le noeud 54 correspondant de la grille d'occupation courante $G^{cur}$ est à l'état occupé (valeur 1) et celui de la grille d'occupation de référence $G^{ref}$ est à l'état libre (valeur 0), ce qui correspond à la troisième ligne du tableau 1, ou encore à la première condition de l'équation (1). Dans ce cas où le noeud A (noeud parent du noeud B) est initialement à l'état inactif, correspondant à la valeur 0, alors que ce noeud fils B est à l'état actif correspondant à la valeur 1, le traitement ultérieur appliqué consiste alors à positionner le noeud parent A à l'état actif (valeur 1), comme représenté par la flèche F1.

Le module de détection 30 est ensuite configuré pour détecter un changement dans la scène, à partir de la grille différentielle $\Delta G$ calculée par le module de calcul 28.

Le module de détection 30 est par exemple configuré pour détecter une apparition d'un objet 26 dans la scène lorsqu'une zone Z correspondante de la grille différentielle $\Delta G$ est à l'état actif.

En complément, l'émetteur-récepteur 38 est apte à recevoir de la part d'un véhicule respectif, tel qu'un véhicule automobile autonome 40, des informations complémentaires de positionnement et/ou de dimensions, le module de conversion 22 étant alors configuré pour utiliser ces informations complémentaires de positionnement et/ou de dimensions afin de compléter et/ou corroborer le contenu d'au moins une partie d'une grille d'occupation $G^{cur}$, $G^{ref}$ correspondante. Ces informations complémentaires de positionnement et/ou de dimensions comportent par exemple une position géographique du véhicule respectif et/ou des dimensions du véhicule respectif. La position géographique du véhicule est alors, après un éventuel changement de repère, utilisée comme un état occupé de la zone Z correspondante. Le module de conversion 22 est configuré pour calculer en outre, à partir des dimensions du véhicule, un nombre de zones Z à l'état occupé, autour de ladite zone Z correspondant à la position géographique. En complément encore ou en variante, le module de conversion 22 est configuré pour exclure la ou les zones Z occupées par le ou les véhicules pendant le calcul de la grille d'occupation de référence $G^{ref}$, les véhicules étant des objets dynamiques ne devant de préférence pas être pris en compte dans la grille d'occupation de référence $G^{ref}$.

Chaque élément de trafic 44 est un élément apte à circuler et/ou à traverser une voie de circulation 42 respective. Chaque élément de trafic 44 est en particulier un élément apte à se trouver dans la scène. Chaque élément de trafic 44 est par exemple choisi parmi le groupe consistant en : un véhicule motorisé, un véhicule non-motorisé, un piéton et un animal.

Le fonctionnement du dispositif électronique de surveillance 10 selon l'invention va désormais être expliqué à l'aide de la figure 2 représentant un organigramme du procédé, selon l'invention, de surveillance de la scène, le procédé étant mis en oeuvre par le dispositif électronique de surveillance 10.

Lors d'une étape initiale 100, le dispositif électronique de surveillance 10 acquiert, via son module d'acquisition 20, la ou les représentations de la scène de la part de l'ensemble 14 de N capteur(s) électronique(s) 16.

Le dispositif de surveillance 10 convertit ensuite, lors de l'étape suivante 110 et via son module de conversion 22, la ou les représentations acquises en une grille d'occupation $G^{cur}$, $G^{ref}$ respective.

Lorsque l'ensemble 14 comporte plusieurs capteurs électroniques 16, la conversion des différentes représentations acquises en la grille d'occupation $G^{cur}$, $G^{ref}$ respective est par exemple effectuée comme décrit précédemment au regard des figures 3 à 5.

Lors de l'étape suivante 120, le dispositif électronique de surveillance 10 calcule alors, via son module de calcul 28, la grille différentielle $\Delta G$ par différence entre la grille d'occupation courante $G^{cur}$ et la grille d'occupation de référence $G^{ref}$. Le calcul de cette grille différentielle est par exemple effectué à l'aide du tableau 1 ci-dessus, ou encore de l'équation (1).

En complément facultatif, lors de cette étape 120, préalablement au calcul de la grille différentielle $\Delta G$, le module de calcul 28 calcule la grille d'occupation de référence $G^{ref}$ si besoin, c'est-à-dire si aucune grille d'occupation de référence $G^{ref}$ n'a encore été calculée ou bien si la grille d'occupation de référence $G^{ref}$ nécessite d'être mise à jour. Le calcul de la grille d'occupation de référence $G^{ref}$ est par exemple effectué à partir de plusieurs grilles d'occupation précédentes G1 à G4, correspondant à plusieurs représentations acquises successivement et préalablement à la représentation courante associée à la grille d'occupation courante $G^{cur}$, comme décrit précédemment au regard des figures 6 à 9.

Le module de calcul 28 est également apte à calculer la grille différentielle $\Delta G$ aussi bien dans le cas où les zones Z correspondantes des grilles d'occupation courante $G^{cur}$ et de référence $G^{ref}$ ont la même résolution, que dans celui où elles ont des résolutions distinctes, comme expliqué précédemment au vu des figures 10 à 12.

En complément facultatif encore, le module de calcul 28 applique le traitement ultérieur à la grille différentielle $\Delta G$ calculée en positionnant à l'état actif chaque noeud parent ayant au moins un noeud fils à l'état actif, depuis le niveau le plus bas L3 jusqu'au niveau le plus élevé, L1 comme illustré au regard de la figure 15.

Le dispositif électronique de surveillance 10 détecte enfin, lors de l'étape suivante 130 et via son module de détection 30, un éventuel changement dans la scène, à partir de la grille différentielle $\Delta G$ calculée à l'étape 120. Le module de détection 30 détecte en particulier l'apparition d'un objet 26 dans la scène lorsqu'une zone Z correspondante de la grille différentielle $\Delta G$ est à l'état actif.

Ainsi, le dispositif électronique de surveillance 10 selon l'invention permet de détecter plus rapidement un changement dans la scène via l'utilisation, d'une part, de la grille d'occupation courante $G^{cur}$ pour la représentation courante de la scène, et d'autre part, de la grille d'occupation de référence $G^{ref}$ pour la représentation de référence de la scène, c'est-à-dire de l'arrière-plan auquel doit être comparée la représentation courante de la scène, puis via le calcul de la grille différentielle $\Delta G$.

Le calcul de la grille différentielle $\Delta G$ est notamment effectué en ignorant chaque zone Z de la grille d'occupation de référence $G^{ref}$ à l'état occupé pour laquelle la zone correspondante Z de la grille d'occupation courante $G^{cur}$ est à l'état libre, ce qui permet de détecter plus efficacement un changement dans la scène observée par le ou les capteurs électroniques 16, et en particulier de diminuer le temps de calcul associé.

## Revendications

1.  Dispositif électronique (10) de surveillance d'une scène via un ensemble (14) de N capteur(s) électronique(s) (16), N étant un nombre entier supérieur ou égal à 1, le dispositif (10) étant destiné à être relié à l'ensemble (14) de N capteur(s) (16) et comprenant :

    - un module d'acquisition (20) configuré pour acquérir, de la part de l'ensemble (14) de N capteur(s) (16), au moins une représentation de la scène,
    - un module de conversion (22) configuré pour convertir chaque représentation acquise en une grille d'occupation ($G^{cur}$, $G^{ref}$) respective, chaque grille d'occupation ($G^{cur}$, $G^{ref}$) comportant une pluralité de zones (Z) correspondant chacune à une portion respective de la représentation, chaque zone (Z) de la grille d'occupation étant à un état occupé si ladite portion contient un objet (26) et à un état libre sinon,
    - un module de calcul (28) configuré pour calculer une grille différentielle ($\Delta G$) correspondant à une différence entre une grille d'occupation courante ($G^{cur}$) et une grille d'occupation de référence ($G^{ref}$), la grille différentielle ($\Delta G$) comportant une pluralité de zones (Z) correspondant chacune à une portion respective de la représentation de la scène, chaque zone (Z) de la grille différentielle ($\Delta G$) étant à un état actif ou un état inactif ; en ignorant chaque zone de la grille d'occupation de référence ($G^{ref}$) qui est à l'état occupé et pour laquelle la zone correspondante de la grille d'occupation courante ($G^{cur}$) est à l'état libre, le module de calcul (28) est configuré pour calculer une zone (Z) respective de la grille différentielle ($\Delta G$) à l'état actif seulement si la zone (Z) correspondante de la grille d'occupation courante ($G^{cur}$) est à l'état occupé et si la zone (Z) correspondante de la grille d'occupation de référence ($G^{ref}$) est à l'état libre, et
    - un module de détection (30) configuré pour détecter un changement de la scène, à partir de la grille différentielle ($\Delta G$) calculée, le module de détection (30) étant configuré pour détecter une apparition d'un objet (26) dans la scène lorsqu'une zone (Z) correspondante de la grille différentielle ($\Delta G$) est à l'état actif.

2.  Dispositif (10) selon la revendication 1, dans lequel le module de calcul (28) est configuré pour calculer la grille différentielle ($\Delta G$) en ignorant chaque zone (Z) de la grille d'occupation de référence ($G^{ref}$) pour laquelle la zone (Z) correspondante de la grille d'occupation courante ($G^{cur}$) est à l'état libre.

3.  Dispositif (10) selon la revendication 1 ou 2, dans lequel les grilles d'occupation ($G^{cur}$, $G^{ref}$) et la grille différentielle ($\Delta G$) sont chacune en forme d'une chaine (48) de bits, chaque bit étant associé à une zone (Z) respective, et

    le module de calcul (28) est configuré pour calculer la grille différentielle ($\Delta G$) selon la table suivante :

| $B^{cur}$ | $B^{ref}$ | $\Delta B$ |
|---|---|---|
| 0 | 0 | 0 |

(suite)

| B$^{cur}$ | B$^{ref}$ | $\Delta$B |
|---|---|---|
| 0 | 1 | 0 |
| 1 | 0 | 1 |
| 1 | 1 | 0 |

où B$^{cur}$ et B$^{ref}$ représentent un bit de la grille d'occupation courante (G$^{cur}$) et respectivement un bit correspondant de la grille d'occupation de référence (G$^{ref}$), le bit 0 désignant l'état libre et le bit 1 désignant l'état occupé, et $\Delta$B représente le bit de la grille différentielle ($\Delta$G) associé aux bits respectifs B$^{cur}$ et B$^{ref}$, le bit 0 désignant l'état inactif et le bit 1 désignant l'état actif.

4. Dispositif (10) selon la revendication 1 ou 2, dans lequel le module de calcul (28) est configuré pour calculer la grille différentielle ($\Delta$G) selon l'équation suivante :

$$\Delta P = \begin{cases} 1 & si \ P^{cur} - P^{ref} > \beta \\ 0 & sinon \end{cases}$$

où P$^{cur}$ et P$^{ref}$ représentent une probabilité qu'une zone (Z) correspondante de la grille d'occupation courante soit occupée, et respectivement une probabilité que ladite zone (Z) de la grille d'occupation de référence soit occupée, avec $0 \leq P^{cur} \leq 1$ et $0 \leq P^{ref} \leq 1$,
$\Delta$P représente le statut de ladite zone (Z) de la grille différentielle ($\Delta$G) associée aux probabilités respectives P$^{cur}$ et P$^{ref}$, la valeur 0 désignant l'état inactif et la valeur 1 désignant l'état actif, et
$\beta$ est une valeur décimale strictement comprise entre 0 et 1, $0 < \beta < 1$.

5. Dispositif (10) selon l'une quelconque des revendications précédentes, dans lequel les grilles d'occupation (G$^{cur}$, G$^{ref}$) et la grille différentielle ($\Delta$G) sont chacune représentées sous forme d'un arbre (52), chaque arbre (52) comportant une pluralité de noeuds (54) répartis en plusieurs niveaux (L1, L2, L3), chaque noeud (54) correspondant à une zone (Z) respective, un noeud fils étant relié à un unique noeud parent de niveau supérieur (L1, L2), et le module de calcul (28) est configuré en outre pour appliquer un traitement ultérieur à la grille différentielle ($\Delta$G) calculée en positionnant à l'état actif chaque noeud parent ayant au moins un noeud fils à l'état actif, depuis le niveau le plus bas (L3) jusqu'au niveau le plus élevé (L1).

6. Dispositif (10) selon l'une quelconque des revendications précédentes, dans lequel la grille d'occupation de référence (G$^{ref}$) est une grille d'occupation résultant de plusieurs représentations acquises successivement et préalablement à la représentation courante associée à la grille d'occupation courante (G$^{cur}$), la grille d'occupation de référence (G$^{ref}$) étant de préférence une moyenne de plusieurs grilles d'occupation précédentes (G1, G2, G3, G4), chacune résultant d'une représentation respective acquise préalablement à la représentation courante associée à la grille d'occupation courante (G$^{cur}$).

7. Dispositif (10) selon l'une quelconque des revendications précédentes, dans lequel N est un nombre entier supérieur ou égal à 2, et le module d'acquisition (20) est configuré pour acquérir, de la part chaque capteur (16), au moins une représentation de la scène, et le module de conversion (22) étant configuré pour convertir les représentations acquises des différents capteurs (16) en la grille d'occupation respective (G$^{cur}$, G$^{ref}$) pour ladite scène, le module de conversion (22) étant de préférence configuré pour convertir chaque représentation acquise en une grille intermédiaire d'occupation pour chaque capteur (16), puis pour combiner les grilles intermédiaires d'occupation en la grille d'occupation respective (G$^{cur}$, G$^{ref}$) pour ladite scène.

8. Procédé de surveillance d'une scène via un ensemble (14) de N capteur(s) électronique(s) (16), N étant un nombre entier supérieur ou égal à 1, le procédé étant mis en oeuvre par un dispositif électronique de surveillance (10) destiné à être relié à l'ensemble (14) de N capteur(s) électronique(s) (16), et comprenant les étapes consistant à :

- acquérir (100), de la part de l'ensemble (14) de N capteur(s) (16), au moins une représentation de la scène,
- convertir (110) chaque représentation acquise en une grille d'occupation (G$^{cur}$, G$^{ref}$) respective, chaque grille d'occupation (G$^{cur}$, G$^{ref}$) comportant une pluralité de zones (Z) correspondant chacune à une portion respective de la représentation, chaque zone (Z) de la grille d'occupation (G$^{cur}$, G$^{ref}$) étant à un état occupé si ladite portion contient un objet (26) et à un état libre sinon,

- calculer (120) une grille différentielle ($\Delta$G) correspondant à une différence entre une grille d'occupation courante (G$^{cur}$) et une grille d'occupation de référence (G$^{ref}$), la grille différentielle ($\Delta$G) comportant une pluralité de zones (Z) correspondant chacune à une portion respective de la représentation de la scène, chaque zone (Z) de la grille différentielle ($\Delta$G) étant à un état actif ou un état inactif ; en ignorant chaque zone (Z) de la grille d'occupation de référence (G$^{ref}$) qui est à l'état occupé et pour laquelle la zone (Z) correspondante de la grille d'occupation courante (G$^{cur}$) est à l'état libre, une zone (Z) respective de la grille différentielle ($\Delta$G) est calculée à l'état actif seulement si la zone (Z) correspondante de la grille d'occupation courante (G$^{cur}$) est à l'état occupé et si la zone (Z) correspondante de la grille d'occupation de référence (G$^{ref}$) est à l'état libre, et

- détecter (130) un changement de la scène, à partir de la grille différentielle ($\Delta$G) calculée, une apparition d'un objet (26) étant détectée dans la scène lorsqu'une zone (Z) correspondante de la grille différentielle ($\Delta$G) est à l'état actif.

9. Programme d'ordinateur comportant des instructions logicielles qui, lorsqu'elles sont exécutées par un ordinateur, mettent en oeuvre un procédé selon la revendication précédente.

**Patentansprüche**

1. Elektronische Vorrichtung (10) zur Überwachung einer Szene über eine Anordnung (14) von N elektronische(n) Sensor(en) (16), wobei N eine ganze Zahl größer als oder gleich wie 1 ist, wobei die Vorrichtung (10) dazu bestimmt ist, mit der Abordnung (14) von N Sensor(en) (16) verbunden zu werden, und umfassend:

    - ein Erfassungsmodul (20), das konfiguriert ist, um von der Anordnung (14) von N Sensor(en) (16) mindestens eine Darstellung der Szene zu erfassen,
    - ein Umwandlungsmodul (22), das konfiguriert ist, um jede erfasste Darstellung in ein jeweiliges Belegungsgitter (G$^{cur}$, G$^{ref}$) umzuwandeln, jedes Belegungsgitter (G$^{cur}$, G$^{ref}$) umfassend eine Vielzahl von Zonen (Z), die jeweils einem jeweiligen Abschnitt der Darstellung entsprechen, wobei jede Zone (Z) des Belegungsgitters in einem belegten Zustand, wenn der Abschnitt ein Objekt (26) enthält, und ansonsten in einem freien Zustand ist,
    - ein Berechnungsmodul (28), das konfiguriert ist, um ein Differenzgitter ($\Delta$G) zu berechnen, das einer Differenz zwischen einem aktuellen Belegungsgitter (G$^{cur}$) und einem Referenzbelegungsgitter (G$^{ref}$) entspricht, das Differenzgitter ($\Delta$G) umfassend eine Vielzahl von Zonen (Z), die jeweils einem entsprechenden Abschnitt der Darstellung der Szene entsprechen, wobei jede Zone (Z) des Differenzgitters ($\Delta$G) in einem aktiven Zustand oder einem inaktiven Zustand ist; wobei jede Zone des Referenzbelegungsgitters (G$^{ref}$), das in dem belegten Zustand ist und für das die entsprechende Zone des aktuellen Belegungsgitters (G$^{cur}$) in dem freien Zustand ist, ignoriert wird, wobei das Berechnungsmodul (28) konfiguriert ist, um eine jeweilige Zone (Z) des Differenzgitters ($\Delta$G) in dem aktiven Zustand nur dann zu berechnen, wenn die entsprechende Zone (Z) des aktuellen Belegungsgitters (G$^{cur}$) in dem belegten Zustand ist und wenn die entsprechende Zone (Z) des Referenzbelegungsgitters (G$^{ref}$) in dem freien Zustand ist, und
    - ein Erfassungsmodul (30), das konfiguriert ist, um eine Veränderung der Szene anhand des berechneten Differenzgitters ($\Delta$G) zu erfassen, wobei das Erfassungsmodul (30) konfiguriert ist, um ein Auftreten eines Objekts (26) in der Szene zu erfassen, wenn eine entsprechende Zone (Z) des Differenzgitters ($\Delta$G) in dem aktiven Zustand ist.

2. Vorrichtung (10) nach Anspruch 1, wobei das Berechnungsmodul (28) konfiguriert ist, um das Differenzgitter ($\Delta$G) zu berechnen, indem es jede Zone (Z) des Referenzbelegungsgitters (G$^{ref}$) ignoriert, für den die entsprechende Zone (Z) des aktuellen Belegungsgitters (G$^{cur}$) in dem freien Zustand ist.

3. Vorrichtung (10) nach Anspruch 1 oder 2, wobei die Belegungsgitter (G$^{cur}$, G$^{ref}$) und das Differenzgitter ($\Delta$G) jeweils in Form einer Kette (48) von Bits sind, wobei jedes Bit mit einer jeweiligen Zone (Z) assoziiert ist, und

das Berechnungsmodul (28) konfiguriert ist, um das Differenzgitter ($\Delta$G) gemäß der folgenden Tabelle zu berechnen:

| B$^{cur}$ | B$^{ref}$ | $\Delta$B |
|---|---|---|
| 0 | 0 | 0 |

(fortgesetzt)

| $B^{cur}$ | $B^{ref}$ | $\Delta B$ |
|-----------|-----------|-----------|
| 0 | 1 | 0 |
| 1 | 0 | 1 |
| 1 | 1 | 0 |

wobei $B^{cur}$ und $B^{ref}$ ein Bit des aktuellen Belegungsgitters ($G^{cur}$) bzw. ein entsprechendes Bit des Referenzbelegungsgitters ($G^{ref}$) darstellen, wobei Bit 0 den freien Zustand und Bit 1 den belegten Zustand bezeichnet, und $\Delta B$ das Bit des Differenzgitters ($\Delta G$) darstellt, das mit den jeweiligen Bits $B^{cur}$ und $B^{ref}$ assoziiert ist, wobei Bit 0 den inaktiven Zustand und Bit 1 den aktiven Zustand bezeichnet.

4. Vorrichtung (10) nach Anspruch 1 oder 2, wobei das Berechnungsmodul (28) konfiguriert ist, um das Differenzgitter ($\Delta G$) gemäß der folgenden Gleichung zu berechnen:

$$\Delta P = \begin{cases} 1 & si \ P^{cur} - P^{ref} > \beta \\ 0 & sinon \end{cases}$$

wobei $P^{cur}$ und $P^{ref}$ eine Wahrscheinlichkeit darstellen, dass eine entsprechende Zone (Z) des aktuellen Belegungsgitters belegt ist, bzw. eine Wahrscheinlichkeit, dass die Zone (Z) des Referenzbelegungsgitters belegt ist, wobei $0 \leq P^{cur} \leq 1$ und $0 \leq P^{ref} \leq 1$,
$\Delta P$ den Zustand der Zone (Z) des Differenzgitters ($\Delta G$) darstellt, der mit den jeweiligen Wahrscheinlichkeiten $P^{cur}$ und $P^{ref}$ assoziiert ist, wobei der Wert 0 den inaktiven Zustand und der Wert 1 den aktiven Zustand bezeichnet, und
$\beta$ ist ein Dezimalwert, der strikt zwischen 0 und 1, $0 < \beta < 1$ liegt.

5. Vorrichtung (10) nach einem der vorherigen Ansprüche, wobei die Belegungsgitter ($G^{cur}$, $G^{ref}$) und das Differenzgitter ($\Delta G$) jeweils in Form eines Baums (52) dargestellt sind, jeder Baum (52) umfassend eine Vielzahl von Knoten (54), die auf mehrere Ebenen (L1, L2, L3) aufgeteilt sind, wobei jeder Knoten (54) einer jeweiligen Zone (Z) entspricht, wobei ein Kindknoten mit einem einzigen Elternknoten einer höheren Ebene (L1, L2) verbunden ist, und
wobei das Berechnungsmodul (28) ferner konfiguriert ist, um eine weitere Verarbeitung auf das berechnete Differenzgitter ($\Delta G$) anzuwenden, indem es jeden Elternknoten, der mindestens einen Kindknoten in dem aktiven Zustand hat, von der niedrigsten Ebene (L3) bis zu der höchsten Ebene (L1) in dem aktiven Zustand positioniert.

6. Vorrichtung (10) nach einem der vorherigen Ansprüche, wobei das Referenzbelegungsgitter ($G^{ref}$) ein Belegungsgitter ist, das aus mehreren Darstellungen resultiert, die nacheinander und vor der aktuellen Darstellung erworben wurden, die mit dem aktuellen Belegungsgitter ($G^{cur}$) assoziiert ist,
wobei das Referenzbelegungsgitter ($G^{ref}$) vorzugsweise ein Mittelwert aus mehreren vorherigen Belegungsgittern (G1, G2, G3, G4) ist, wovon jedes aus einer jeweiligen Darstellung resultiert, die vor der aktuellen Darstellung, die mit dem aktuellen Belegungsgitter ($G^{cur}$) assoziiert ist, erfasst wird.

7. Vorrichtung (10) nach einem der vorherigen Ansprüche, wobei N eine ganze Zahl größer als oder gleich wie 2 ist, und das Erfassungsmodul (20) konfiguriert ist, um von jedem Sensor (16) mindestens eine Darstellung der Szene zu erfassen, und das Umwandlungsmodul (22) konfiguriert ist, um die von den verschiedenen Sensoren (16) erfassten Darstellungen in das jeweilige Belegungsgitter ($G^{cur}$, $G^{ref}$) für die Szene umzuwandeln,
wobei das Umwandlungsmodul (22) vorzugsweise konfiguriert ist, um jede erfasste Darstellung in ein Zwischenbelegungsgitter für jeden Sensor (16) umzuwandeln und dann die Zwischenbelegungsgitter zu dem jeweiligen Belegungsgitter ($G^{cur}$, $G^{ref}$) für die Szene zu kombinieren.

8. Verfahren zum Überwachen einer Szene über eine Anordnung (14) von N elektronische(n) Sensor(en) (16), wobei N eine ganze Zahl größer als oder gleich wie 1 ist, wobei das Verfahren von einer elektronischen Überwachungsvorrichtung (10) durchgeführt wird, die dazu bestimmt ist, mit der Anordnung (14) von N elektronische(n) Sensor(en) (16) verbunden zu sein, und umfassend die Schritte, die aus Folgendem bestehen:

- Erfassen (100), von der Anordnung (14) von N Sensor(en) (16), mindestens einer Darstellung der Szene,

- Umwandeln (110) jeder erfassten Darstellung in ein jeweiliges Belegungsgitter ($G^{cur}$, $G^{ref}$), jedes Belegungsgitter ($G^{cur}$, $G^{ref}$) umfassend eine Vielzahl von Zonen (Z), die jeweils einem jeweiligen Abschnitt der Darstellung entsprechen, wobei jede Zone (Z) des Belegungsgitters ($G^{cur}$, $G^{ref}$) in einem belegten Zustand, wenn der Abschnitt ein Objekt (26) enthält, und ansonsten in einem freien Zustand ist,

- Berechnen (120) eines Differenzgitters ($\Delta G$), das einer Differenz zwischen einem aktuellen Belegungsgitter ($G^{cur}$) und einem Referenzbelegungsgitter ($G^{ref}$) entspricht, das Differenzgitter ($\Delta G$) umfassend eine Vielzahl von Zonen (Z), die jeweils einem entsprechenden Abschnitt der Darstellung der Szene entsprechen, wobei jede Zone (Z) des Differenzgitters ($\Delta G$) in einem aktiven Zustand oder einem inaktiven Zustand ist; wobei jede Zone (Z) des Referenzbelegungsgitters ($G^{ref}$), das in dem belegten Zustand ist und für das die entsprechende Zone (Z) des aktuellen Belegungsgitters ($G^{cur}$) in dem freien Zustand ist, ignoriert wird, wobei eine jeweilige Zone (Z) des Differenzgitters ($\Delta G$) nur dann in dem aktiven Zustand berechnet wird, wenn die entsprechende Zone (Z) des aktuellen Belegungsgitters ($G^{cur}$) in dem belegten Zustand ist und wenn die entsprechende Zone (Z) des Referenzbelegungsgitters ($G^{ref}$) in dem freien Zustand ist, und

- Erfassen (130) einer Veränderung der Szene anhand des berechneten Differenzgitters ($\Delta G$), wobei ein Auftreten eines Objekts (26) in der Szene erfasst wird, wenn eine entsprechende Zone (Z) des Differenzgitters ($\Delta G$) in dem aktiven Zustand ist.

9. Computerprogramm, umfassend Softwareanweisungen, die, wenn sie von einem Computer ausgeführt werden, ein Verfahren nach dem vorherigen Anspruch implementieren.

**Claims**

1. Electronic device (10) for monitoring a scene via a set (14) of N electronic sensor(s) (16), where N is an integer greater than or equal to 1, the device (10) being intended to be connected to the set (14) of N sensor(s) (16) and comprising:

   - an acquisition module (20) configured to acquire, from the set (14) of N sensor(s) (16), at least one representation of the scene,
   - a conversion module (22) configured to convert each acquired representation into a respective occupation grid ($G^{cur}$, $G^{ref}$), each occupation grid ($G^{cur}$, $G^{ref}$) comprising a plurality of zones (Z) each corresponding to a respective portion of the representation, each zone (Z) of the occupation grid being in an occupied state if said portion contains an object (26) and in an unoccupied state if not,
   - a calculation module (28) configured to calculate a differential grid ($\Delta G$) corresponding to a difference between a current occupation grid ($G^{cur}$) and a reference occupation grid ($G^{ref}$), the differential grid ($\Delta G$) comprising a plurality of zones (Z) each corresponding to a respective portion of the representation of the scene, each zone (Z) of the differential grid ($\Delta G$) being in an active state or an inactive state; by ignoring each zone of the reference occupation grid ($G^{ref}$) which is in the occupied state and for which the corresponding zone of the current occupation grid ($G^{cur}$) is in the unoccupied state, the calculation module (28) is configured to calculate a respective zone (Z) of the differential grid ($\Delta G$) in the active state only if the corresponding zone (Z) of the current occupation grid ($G^{cur}$) is in the occupied state and if the corresponding zone (Z) of the reference occupation grid ($G^{ref}$) is in the unoccupied state, and
   - a detection module (30) configured to detect a change in the scene from the calculated differential grid ($\Delta G$), the detection module (30) being configured to detect an appearance of an object (26) in the scene when a corresponding zone (Z) of the differential grid ($\Delta G$) is in the active state.

2. Device (10) according to claim 1, wherein the calculation module (28) is configured to calculate the differential grid ($\Delta G$) by ignoring each zone (Z) of the reference occupation grid ($G^{ref}$) for which zone (Z) corresponding to the current occupation grid ($G^{cur}$) is in the unoccupied state.

3. Device (10) according to claim 1 or 2, wherein the occupation grids ($G^{cur}$, $G^{ref}$) and the differential grid ($\Delta G$) are each in the form of a bit string (48), each bit being associated with a respective zone (Z), and

   the calculation module (28) is configured to calculate the differential grid ($\Delta G$) according to the following table:

| $B^{cur}$ | $B^{ref}$ | $\Delta B$ |
|---|---|---|
| 0 | 0 | 0 |

(continued)

| B$^{cur}$ | B$^{ref}$ | $\Delta$B |
|:---:|:---:|:---:|
| 0 | 1 | 0 |
| 1 | 0 | 1 |
| 1 | 1 | 0 |

wherein B$^{cur}$ and B$^{ref}$ represent a bit of the current occupation grid (G$^{cur}$) and respectively a corresponding bit of the reference occupation grid (G$^{ref}$), the bit 0 denoting the unoccupied state and the bit 1 denoting the occupied state, and

$\Delta$B represents the bit of the differential grid ($\Delta$G) associated with the respective bits B$^{cur}$ and B$^{ref}$, the bit 0 denoting the inactive state and the bit 1 denoting the active state.

4. Device (10) according to claim 1 or 2, wherein the calculation module (28) is configured to calculate the differential grid ($\Delta$G) according to the following equation:

$$\Delta P = \begin{cases} 1 & if \ P^{cur} - P^{ref} > \beta \\ 0 & otherwise \end{cases}$$

wherein P$^{cur}$ and P$^{ref}$ represent a probability that a corresponding zone (Z) of the current occupation grid is occupied, and respectively a probability that said zone (Z) of the reference occupation grid is occupied, with $0 \leq P^{cur} \leq 1$ and $0 \leq P^{ref} \leq 1$,

$\Delta$P represents the state of said zone (Z) of the differential grid ($\Delta$G) associated with the respective probabilities P$^{cur}$ and P$^{ref}$, the value 0 denoting the inactive state and the value 1 denoting the active state, and

$\beta$ is a decimal value strictly between 0 and 1, $0 < \beta < 1$.

5. Device (10) according to any one of the preceding claims, wherein the occupation grids (G$^{cur}$, G$^{ref}$) and the differential grid ($\Delta$G) are each represented in the form of a tree (52), each tree (52) having a plurality of nodes (54) divided into several levels (L1, L2, L3), each node (54) corresponding to a respective zone (Z), a child node being connected to a single higher level parent node (L1, L2), and

the calculation module (28) is further configured to apply subsequent processing to the calculated differential grid ($\Delta$G) by placing in active status each parent node having at least one child node in the active state, from the lowest level 1 (L3) to the highest level (L1).

6. Device (10) according to any one of the preceding claims, wherein the reference occupation grid (G$^{ref}$) is an occupied grid resulting from several representations acquired successively and prior to the current representation associated with the current occupation grid (G$^{cur}$),

the reference occupation grid (G$^{cur}$) preferably being an average of several previous occupation grids (G1, G2, G3, G4), each resulting from a respective representation acquired prior to the current representation associated with the current occupation grid (G$^{cur}$).

7. Device (10) according to any one of the preceding claims, wherein N is an integer greater than or equal to 2, and the acquisition module (20) is configured to acquire, from each sensor (16) at least one representation of the scene, and the conversion module (22) being configured to convert the acquired representations of the different sensors (16) into the respective occupation grid (G$^{cur}$, G$^{ref}$) for said scene,

the conversion module (22) preferably being configured for converting each representation acquired in an intermediate occupation grid for each sensor (16) and to combine the intermediate occupation grid in the respective occupation grid (G$^{cur}$, G$^{ref}$) for said scene.

8. Method for monitoring a scene via a set (14) of N electronic sensor(s) (16), where N is an integer greater than or equal to 1, the method being implemented by an electronic monitoring device (10) for connection to the set (14) of N electronic sensor(s) (16), and comprising the steps of:

- acquiring (100), from the set (14) of N sensor(s) (16), at least one representation of the scene,

- converting (110) each acquired representation into a respective occupation grid ($G^{cur}$, $G^{ref}$), each occupation grid ($G^{cur}$, $G^{ref}$) comprising a plurality of zones (Z) each corresponding to a respective portion of the representation, each zone (Z) of the occupation grid ($G^{cur}$, $G^{ref}$) being in an occupied state if said portion contains an object (26) and in an unoccupied state if not,

- calculating (120) a differential grid ($\Delta G$) corresponding to a difference between a current occupation grid ($G^{cur}$) and a reference occupation grid ($G^{ref}$), the differential grid ($\Delta G$) comprising a plurality of zones (Z) each corresponding to a respective portion of the representation of the scene, each zone (Z) of the differential grid ($\Delta G$) being in an active state or an inactive state; by ignoring each zone of the reference occupation grid ($G^{ref}$) which is in the occupied state and for which the corresponding zone of the current occupation grid ($G^{cur}$) is in the unoccupied state, a respective zone (Z) of the differential grid ($\Delta G$) is calculated in the active state only if the corresponding zone (Z) of the current occupation grid ($G^{cur}$) is in the occupied state and if the corresponding zone (Z) of the reference occupation grid ($G^{ref}$) is in the unoccupied state, and

- detecting (130) a change in the scene from the calculated differential grid ($\Delta G$), an appearance of an object (26) is detected in the scene when a corresponding zone (Z) of the differential grid ($\Delta G$) is in the active state.

9. Computer program comprising software instructions which, when executed by a computer, implement a method according to the preceding claim.

FIG.1

| Acquisition de représentation(s) d'une scène de la part d'un ensemble de capteur(s) | 100 |

| Conversion de chaque représentation acquise en une grille d'occupation respective | 110 |

**FIG.2**

| Calcul d'une grille différentielle par différence entre la grille d'occupation courante et une grille d'occupation de référence | 120 |

| Détection d'un changement dans la scène à partir de la grille différentielle calculée | 130 |

**FIG.3**

FIG.4

FIG.5

**FIG.6**

**FIG.7**

FIG.8

FIG.9

**FIG.10**

**FIG.11**

**FIG.12**

**FIG.13**

FIG.14

FIG.15

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2015185846 A1

**Littérature non-brevet citée dans la description**

- **DE VATAVU.** *Real-Time Environment Representation based on Occupancy Grid Temporal Analysis using a Dense Stereo-Vision System*
- **DE PICCARDI et al.** Background subtraction techniques : a review. *IEEE International Conférence on Systems, Man and Cybernetics,* 2004
- **DONALD J. R. MEAGHER.** Octree encoding: A new technique for the representation, manipulation and display of arbitrary 3D objects by computer. *Image Processing Laboratory,* Octobre 1980